# DEMANDE DE BREVET EUROPEEN

(11) **EP 4 391 692 A1**
(43) Date de publication de la demande: **26.06.2024**
(21) Numéro de dépôt: 23216919.3
(22) Date de dépôt: 14.12.2023
(51) Int. Cl.: H04W 72/541, H04K 3/00, H04W 72/0453

(54) **PROCÉDÉ D'ALLOCATION DYNAMIQUE DE RESSOURCES POUR LA COMMUNICATION PAR ONDES RADIO EN SITUATION D'INTERFÉRENCES**

(30) Priorité: 22.12.2022 FR 2214220
(71) Demandeur: THALES, 92190 Meudon (FR)
(72) Inventeur: CAPDEVIELLE, Véronique, 92622 GENNEVILLIERS Cedex (FR); KHUC, Doan, 92622 GENNEVILLIERS Cedex (FR); CONAN, Vania, 92622 GENNEVILLIERS Cedex (FR); BUCAILLE, Isabelle, 92622 GENNEVILLIERS Cedex (FR); SELVA, Bruno, 92622 GENNEVILLIERS Cedex (FR); ADRIAN, Cyril, 92622 GENNEVILLIERS Cedex (FR); LINDENTAL, Maxime, 92622 GENNEVILLIERS Cedex (FR)
(74) Mandataire: Atout PI Laplace

(57) **Abrégé**

Procédé d'allocation dynamique de ressources pour la communication par ondes radio entre une station de base (10) d'un réseau de communication et des équipements utilisateurs (25). Le procédé comprend, en réaction à une détection (E0) de brouillage entre la station de base (10) et un ou plusieurs équipements utilisateurs (25), une étape d'affectation (E1) des équipements utilisateurs (25) à au moins deux classes d'équipements utilisateurs en fonction au moins d'un niveau d'impact du brouillage détecté sur la communication entre l'équipement utilisateur respectif et la station de base. Puis, en fonction de l'affectation, pour les équipements utilisateurs d'au moins une classe de brouillage élevé, changement (E3a) d'au moins une bande ou sous-bande de fréquences pour leur communication avec la station de base, pour les équipements utilisateurs d'au moins une classe de brouillage faible, maintien (E3b) inchangé des bandes et sous-bandes de fréquences pour leur communication avec la station de base. Il y a aussi une configuration (E3c) de faisceaux de la station de base (10) vers des équipements utilisateurs (25) d'au moins une classe de brouillage différente de la classe de brouillage élevée.

## Description

L'invention s'inscrit dans le domaine des télécommunications par ondes radiofréquences, sur un réseau comprenant des stations de base communiquant avec des équipements utilisateurs pouvant être dispersés sur un territoire. Elle s'intéresse à la réponse à une situation de brouillage en fréquence de la communication entre une station de base et certains équipements utilisateurs présents sur le territoire dans laquelle la station de base et les équipements utilisateurs font face à des interférences. Le réseau concerné dispose inévitablement de ressources limitées, notamment des ressources spectrales limitées, c'est-à-dire que la station de base n'a pas un choix infini de fréquences sur lesquelles émettre pour communiquer à destination de tel ou tel équipement utilisateur, la bande spectrale étant limitée, et doit donc faire des choix voire des compromis dans certaines circonstances. Ces choix ou compromis sont compliqués par la présence d'un brouillage qui sur une partie de territoire, rend difficilement utilisable une certaine partie des fréquences de communication envisageables initialement.

Les réseaux de communication utilisés sont les réseaux de communication cellulaires de téléphonie mobile, comme les réseaux 5G ou développés à partir des technologies 5G, et également les réseaux militaires de communication par ondes radiofréquences fondés sur des stations de base ou un maître de communication, qui peut être un maître local au sol parmi d'autres maîtres locaux au sol, ou éventuellement un maître de communication unique, pas nécessairement au sol.

On connaît du document « A study of 5G New radio and its vulnerability to jamming » FFI Nonnregian Defence Research Establishment 22/00906 différentes pistes très préliminaires de lutte contre le brouillage. Ces pistes sont l'apport d'une puissance supplémentaire aux équipements utilisateurs, la formation de faisceaux directionnels entre la station de base et un équipement utilisateur (beamforming), l'utilisation d'antennes supplémentaires pour l'équipement utilisateur, l'utilisation de la technologie MIMO massif (entrées multiples, sorties multiples, avec des interférences entre antennes) pour peut-être détecter et supprimer l'interférence, la modification des paramètres de couche physique comme par exemple une augmentation de la tolérance aux taux de retransmission élevés, ou une bascule par l'équipement utilisateur vers une bande de fréquences disponible et non perturbée.

Ainsi, les différentes solutions d'antibrouillage connues en sont à un stade préliminaire et ne peuvent pas être mises en oeuvre simultanément ou de façon combinée. La solution du simple repli fréquentiel est mise en oeuvre de manière très indifférenciée. Les performances sont impactées par la limitation de la bande spectrale exploitée. La solution de formation de faisceaux directionnels est parfois insuffisante, le brouillage pouvant rester efficace malgré la formation du faisceau directionnel.

Dans ce contexte, l'invention consiste en un procédé d'allocation dynamique de ressources pour la communication par ondes radio entre une station de base d'un réseau de communication et des équipements utilisateurs.

Le procédé comprend, en réaction à une détection de brouillage entre la station de base et un ou plusieurs équipements utilisateurs, une étape d'affectation des équipements utilisateurs à au moins deux classes d'équipements utilisateurs en fonction au moins d'un niveau d'impact du brouillage détecté sur la communication entre l'équipement utilisateur respectif et la station de base.

Puis, en fonction de l'affectation, le procédé comprend
- pour les équipements utilisateurs d'au moins une classe de brouillage élevé, un changement d'au moins une bande ou sous-bande de fréquences pour leur communication avec la station de base,
- pour les équipements utilisateurs d'au moins une classe de brouillage non élevé, maintien essentiellement inchangé des bandes et sous-bandes de fréquences pour leur communication avec la station de base,
- ainsi que configuration de faisceaux de la station de base vers des équipements utilisateurs dont certains au moins sont dans la classe de brouillage non élevé.

Grâce à ce procédé, on préserve les ressources spectrales : certains utilisateurs échappent au brouillage grâce au changement de fréquence, et d'autres y échappent grâce à la formation de faisceaux, et on arrive globalement à une qualité de service élevée malgré une dépense en ressources modérée, puisque seuls des changements fréquentiels limités sont menés.

Si les faisceaux étaient déjà formés au moment de la détection du brouillage, les faisceaux des classes de brouillage faible sont maintenus, voire améliorés, par prise en compte du brouillage et de la reconfiguration des ressources spectrales qui est parallèlement menée.

Et certains utilisateurs qui sont d'ores et déjà préservés du brouillage, ou qui peuvent l'être efficacement par l'amélioration des faisceaux, gardent selon l'invention la même fréquence, pour conserver des fréquences de repli disponibles pour les utilisateurs très brouillés, pour lesquels la formation de faisceau n'est pas hautement efficace pour les préserver du brouillage.

Si des faisceaux n'étaient pas formés au moment de la détection du brouillage, des faisceaux sont créés pour les utilisateurs qui sont brouillés sans pour autant être en classe de brouillage élevé. Et un changement de fréquence est effectué pour les utilisateurs les plus brouillés, et selon l'invention uniquement pour eux, de manière à utiliser optimalement les ressources spectrales.

Ainsi, selon l'invention, certains utilisateurs subissant le brouillage sans qu'ils le subissent autant que d'autres, profitent d'une configuration de faisceaux et conservent les bandes de fréquences qui leur était attribuées initialement, et d'autres utilisateurs, plus impactés que les premiers et sélectionnés sur cette base pour être en nombre limités, bénéficient d'une nouvelle allocation de bande de fréquence ou sous-bande de fréquence. Le nombre limité des utilisateurs bénéficiant d'une nouvelle allocation fréquentielle permet de gérer, en ne la gaspillant pas, la ressource limitée en gammes de fréquences disponibles.

Les caractéristiques suivantes sont optionnelles et avantageuses :
- le changement d'au moins une bande ou sous-bande de fréquences peut être mené vers au moins une autre bande ou sous-bande, identifiée par mesure de densité spectrale de puissance, évaluée au niveau d'un ensemble d'équipements utilisateurs.
- le changement d'au moins une bande ou sous-bande de fréquences peut comprendre une activation de blocs de fréquences contigus, notamment des Bandwidth parts en standard 5G, ou encore des blocs de fréquences disjoints ou une activation de blocs de fréquences pour agrégation d'une porteuse. L'activation peut être faite simultanément à une désactivation d'autres blocs de fréquences.
- la configuration de faisceaux peut comprendre de plus une modification de faisceaux pour un équipement utilisateur d'une classe de brouillage élevé après le changement d'au moins une bande ou sous-bande de fréquences pour la communication dudit équipement utilisateur avec la station de base, pour maximiser le gain pour un lien montant ou pour un lien descendant vers ledit équipement utilisateur.
- le changement d'au moins une bande ou sous-bande de fréquences peut comprendre une détermination d'une bande spectrale brouillée d'un équipement utilisateur en analysant les blocs de ressources physiques alloués par le processeur d'ordonnancement.
- l'affectation aux classes peut se faire de plus en prenant en compte des poids de formation de faisceaux formés préalablement à la détection de brouillage entre les équipements utilisateurs et la station de base.
- l'affectation aux classes peut se faire de plus en utilisant des informations de localisation ou des techniques de positionnement.
- le réseau étant un réseau de téléphonie cellulaire 4G ou ultérieur, l'affectation aux classes peut se faire en utilisant des informations nativement collectées par la station de base.
- le procédé peut comprendre de plus une configuration de faisceaux, par mise en oeuvre d'une fonction d'antenne massive MIMO, comprenant en particulier pour des équipements utilisateurs de la classe de brouillage élevé un ordonnancement coordonné de plusieurs faisceaux séparés spatialement sur les mêmes ressources temps et fréquence.
- le procédé peut comprendre de plus une configuration de faisceaux qui ouvre, par mise en oeuvre d'une fonction d'antenne massive MIMO, plus largement des faisceaux dirigés vers les utilisateurs d'une classe de brouillage faible que vers les utilisateurs d'une classe de brouillage élevé.

L'exposé de l'invention va être poursuivi en relation avec les figures, présentées à titre illustratif et parmi lesquelles
Les figures 1 et 2 montrent des situations de brouillage impactant certains équipements utilisateurs sur un territoire couvert par une station de base.
La figure 3 montre l'utilisation de la formation de faisceau dans une telle situation.
La figure 4 montre le processus général de l'invention.
La figure 5 montre une première étape d'un mode de réalisation de l'invention.
La figure 6 montre une étape de prise de décision à l'issue de l'étape préliminaire.
La figure 7 montre la mise en oeuvre de l'étape centrale d'un mode de réalisation de l'invention.
La figure 8 montre un aspect particulier d'un mode de réalisation de l'invention.

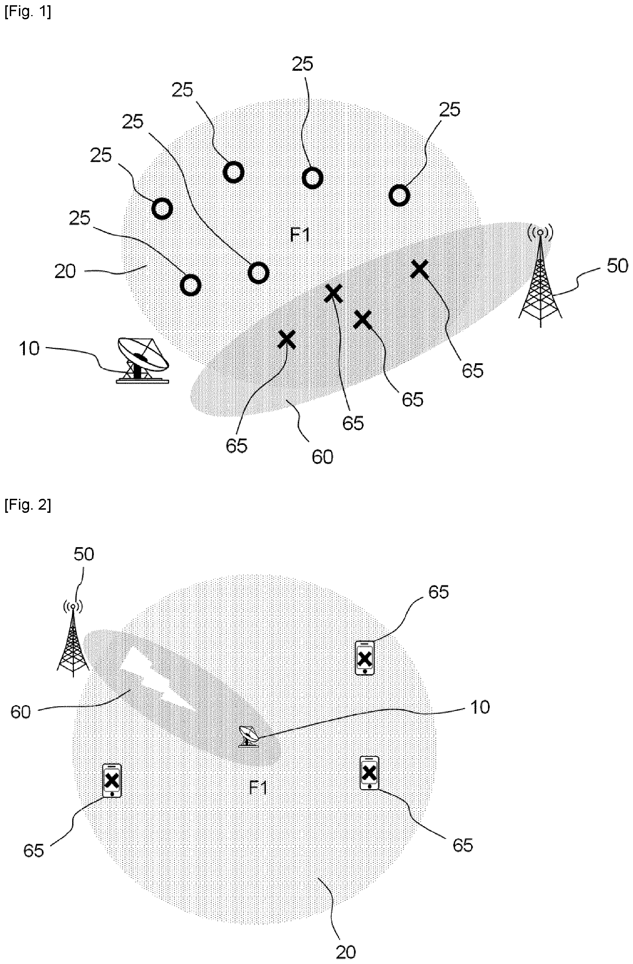

En figure 1, on a représenté dans le contexte d'un réseau de téléphonie cellulaire une station de base 10, au sol ou sur un bâtiment reposant sur le sol et supposée fixe, émettant dans une zone de couverture 20 avec une gamme de fréquences F1. La bonne transmission des communications dans une partie de la zone de couverture 20 est contrariée par un brouilleur 50, placé au sol ou sur un bâtiment ou véhicule reposant sur le sol et supposé fixe, qui émet des ondes de brouillage dans une zone de brouillage 60 qui présente une intersection avec la zone de couverture 20. Les équipements utilisateurs présents dans la zone de couverture 20, qui sont destinés à communiquer en liaisons montantes et descendantes avec la station de base 10 se trouvent soit en dehors de la zone de brouillage 60, et sont qualifiés d'équipements utilisateurs indemnes 25, car leur communication montante ou descendante avec la station de base 10 n'est pas touchée par le brouillage, soit dans la zone de brouillage 60, et sont alors qualifiés d'équipement utilisateurs brouillés 65. La station de base 10 présentée en figure 1, à titre d'illustration, n'émet que sur un secteur angulaire autour d'elle, et est donc présente plutôt en périphérie de la zone de couverture 20. Mais elle peut aussi être au centre celle-ci, en émettant dans toutes les directions. De la même manière, le brouilleur peut être omnidirectionnel, même si souvent, il concentre sa puissance dans une direction donnée.

En figure 2, une représentation similaire est montrée, la station de base 10 étant cette fois-ci figurée à l'intérieur de sa zone de couverture 20 -elle émet dans toutes les directions horizontales. En figure 2, de plus, aucun équipement utilisateur n'est représenté dans la zone de brouillage 60. Par contre, la station de base 10 est à l'intérieur de la zone de brouillage 60, alors qu'elle ne l'est pas en figure 1. Ainsi, finalement, du fait de la présence dans la zone de brouillage 60 de la station de base 10, tous les équipements utilisateurs sont des équipements utilisateurs brouillés 65, même si le niveau de brouillage peut être variable, de faible à élevé. La figure 2 montre aussi par un symbole directionnel que le brouillage est un brouillage par liaison montante : les signaux sont émis par le brouilleur 50 vers le terrain que les personnes organisant le brouillage cherchent à impacter.

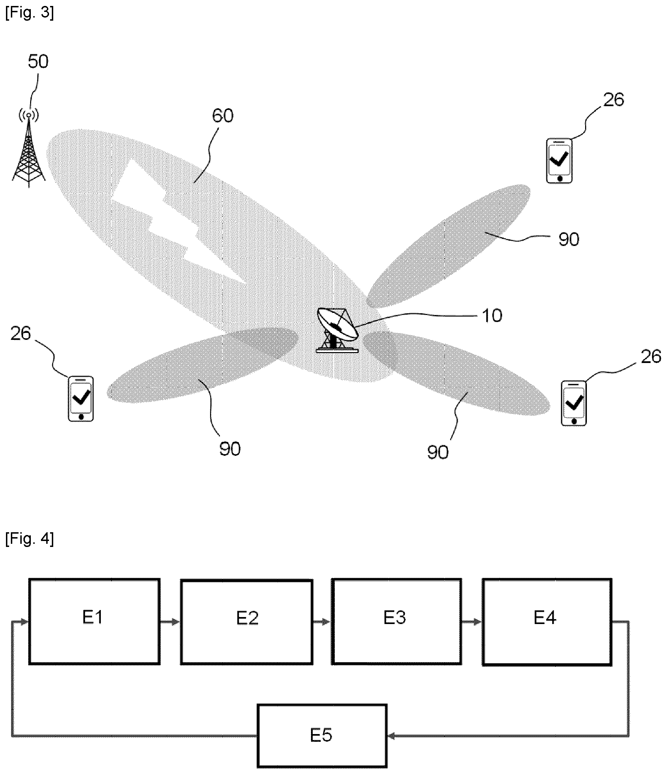

La figure 3 montre la formation de faisceaux qui est utilisée en réaction à la détection par les opérateurs du réseau ou l'informatique de celui-ci, ou de la station de base 10. Des faisceaux directionnels 90 sont utilisés pour communiquer entre la station de base 10 et chacun des équipements utilisateurs. Ces faisceaux se superposent sur une petite partie de leur longueur et de leur largeur avec la zone de brouillage 60 (cas de la figure 3, issue de la figure 2), voire pour certains d'entre eux, ne se superposent pas du tout à celle-ci, si la station de base 10 n'est pas située dans la zone de brouillage 60 (cas non représenté qui serait issu de la figure 1). Ces équipements utilisateurs sont qualifiés d'équipements utilisateurs récupérés 26, car ils ont, après l'introduction de la formation de faisceaux, une qualité de communication proche de celle des équipements utilisateurs indemnes 25. La formation de faisceaux, pour chacun d'entre eux, a la conséquence d'obtenir un gain plus élevé, dans l'angle solide du faisceau, qui permet de surpasser la puissance de brouillage. Ce gain plus élevé est obtenu en transmission (lien descendant) et en réception (lien montant). La formation de faisceaux a aussi pour effet de développer la réjection d'interférence ou atténuation (null steering ou zéro forcing en anglais, ou application de zéros) en direction du brouilleur 50, qui est, par rapport à la station de base 10, dans une direction qui ne coïncide avec aucun des faisceaux formés.

La figure 4 montre le processus général de l'invention. Une étape E1 de partitionnement des équipements utilisateurs est effectuée, puis elle est suivie par une étape E2 de définition d'une stratégie de configuration de la station de base, incluant la configuration spatiale et la configuration fréquentielle, puis par une étape E3 de mise en oeuvre de la stratégie, et finalement une étape E4 d'allocation des éléments d'antenne. Une étape E5 suivant l'étape E4 est indiquée pour montrer le retour à l'étape E1, car le processus est un processus en boucle permanente, ininterrompue.

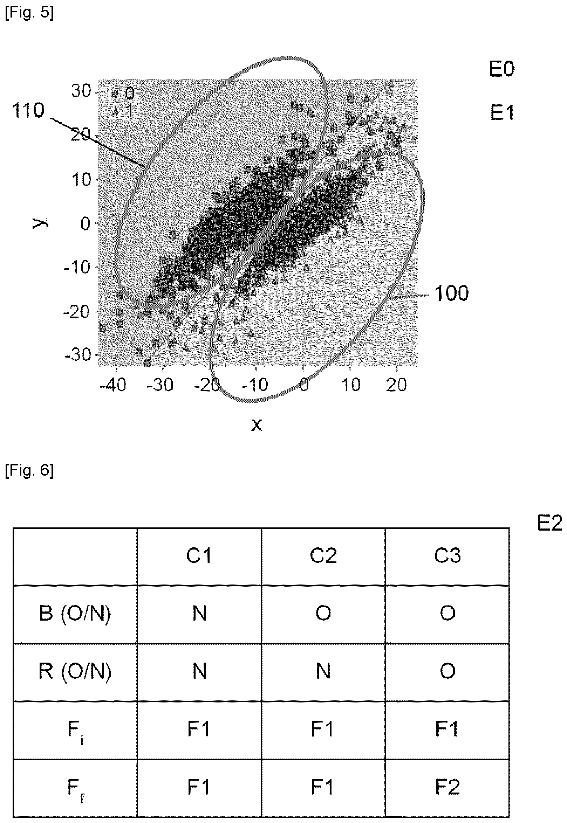

La figure 5 montre l'étape initiale de l'invention, par laquelle en réaction à une détection E0 d'une suspicion de brouillage pour un équipement utilisateur, par exemple par identification d'un rapport signal sur interférence plus bruit (SINR) en abscisses x faible au vu d'une valeur de puissance reçue de signal de référence (RSPR en anglais Référence Signal Received Power) en ordonnées y, les équipements utilisateurs présents sur la zone de couverture 20 (figures 1 ou 2) sont classés en plusieurs catégories. Il s'agit de l'étape E1 de partitionnement des équipements utilisateurs. Ce classement peut être effectué avant la formation de faisceaux, ou après celle-ci en tenant compte d'informations mesurées ou obtenues une fois les faisceaux formés.

Les catégories, ou clusters, peuvent être, si elles sont établies avant la formation de faisceaux, au nombre de trois, auquel cas il s'agit des catégories brouillage faible, brouillage moyen et brouillage élevé.

Elles peuvent être aussi au nombre de deux catégories, notamment si elles sont établies après la formation de faisceaux : la catégorie des équipements utilisateurs à brouillage persistant après la formation de faisceaux et la catégorie des équipements utilisateurs ne nécessitant pas de mesure supplémentaire au-delà de la formation de faisceaux.

A partir du moment où un ou plusieurs équipements utilisateurs sont classés dans une catégorie brouillage moyen ou fort (classification à 3 catégories), ou persistant (classification à deux catégories), une stratégie de lutte contre le brouillage selon l'invention, c'est-à-dire par modification fréquentielle, est mise en oeuvre. La figure 5 s'arrête néanmoins sur la formation des catégories.

Pour établir ces catégories, une démarche de partitionnement de l'ensemble des équipements utilisateurs connus de la station de base 10 comme étant présent dans sa zone de couverture 20 est menée, par un processus d'intelligence artificielle comme un apprentissage par machine, qui peut être une machine à vecteur de support SVM, une méthode des K plus proches voisins KNN, un partitionnement en k-moyenne, ou une méthode de forêt d'arbres décisionnels.

Le processus décisionnel est mené sur la base des données obtenues initialement, à savoir les caractéristiques spectrales et spatiales associées à chaque équipement utilisateur et les niveaux de brouillage constatés.

Chaque équipement utilisateur brouillé est, en vue d'un partitionnement, caractérisé spectralement, et également spatialement.

La caractérisation spectrale se fait par identification des bandes et sous-bandes spectrales impactées par le brouilleur. Pour cela l'étape de procédé qui est mise en oeuvre est :
- l'obtention et la lecture des blocs de ressource physique alloués par l'ordonnanceur en charge de la station de base pour connaître la bande spectrale brouillée.

En ce qui concerne la caractérisation spatiale, celle-ci se fait avec des informations de localisation si de telles informations sont disponibles ou via la directivité des faisceaux si la formation de faisceaux a été appliquée. Des techniques de positionnement par doppler, l'analyse du décalage temporel d'arrivée en liaison montante UTDOA, IA, etc... sont exploitées. Si une formation de faisceaux a été engagée, les facteurs d'amplification (poids) de la formation de faisceaux ou les identifiants de faisceau sont des indicateurs de localisation spatiale exploités pour la caractérisation spatiale.

La figure 5 montre une mise en oeuvre par apprentissage par machine, menée en comparant des données de rapport signal sur interférence plus bruit (SINR) en abscisses x (en échelle logarithmique), et de puissance reçue de signal de référence (RSRP) en ordonnées y (en échelle logarithmique) aux instants t et t-1. L'algorithme détermine une frontière, un hyperplan qui est ici une ligne, entre
- les équipements utilisateurs considérés comme indemnes 100 (SINR, donc abscisse x plutôt élevé pour un RSRP donc ordonnée y proportionnellement plutôt faible)
- et ceux considérés comme brouillés 110 (SINR plutôt faible pour un RSPR proportionnellement plutôt élevé).

Le partitionnement peut se faire en utilisant de manière générale des données d'entrée des mesures nativement collectées en téléphonie cellulaire de type 4G ou 5G ou ultérieur, telles que l'information de qualité du canal CQI Channel Quality Indicator, le nombre de retransmissions lié au #NACK Not-Acknowledged et le schéma de modulation et codage MCS Modulation and Coding Scheme.

Le partitionnement peut être fondé sur des données spectrales (spectral clustering) ou impliquer un regroupement hiérarchique (hierarchical clustering).

Le partitionnement utilisé mène à un regroupement des équipements utilisateurs, qui dans chaque groupe ont une forte similarité spectrale, spatiale, et en terme de classe de brouillage.

En figure 6, on montre l'étape E2 de définition de la stratégie de configuration de la station de base.

Le tableau montre 3 clusters, C1 à C3, qui font l'objet ou non (O/N) de formations de faisceau B entre la station de base et les équipements utilisateurs du cluster parce qu'ils sont en catégorie hautement ou moyennement brouillés (O) ou faiblement brouillés (N). Ceux des clusters qui font l'objet de telles formations de faisceaux font l'objet ou non (O/N), en complément et conformément à l'invention d'un repli fréquentiel R, s'ils sont en catégorie hautement brouillés. Ceux qui font l'objet d'un tel repli fréquentiel, parce qu'ils ont en catégorie hautement brouillés, ou brouillage persistant, voient leur bande de fréquence initiale Fi être remplacée par une bande finale Ff, différente de Fi. Elle peut être identique pour tous les équipements utilisateurs subissant un repli fréquentiel, et elle est notée F2.

Ainsi, pour les équipements utilisateurs du cluster C1, il n'y a ni formation de faisceaux ni repli fréquentiel. Pour les équipements du cluster C2, il y a formation de faisceaux, mais pas repli fréquentiel, et pour les équipements des clusters C3, C4 et C5, il y a formation de faisceaux et repli fréquentiels vers des bandes finales spécifiques pour chaque utilisateur.

La méthode d'identification d'une bande ou sous-bande de fréquences de repli pour les équipements utilisateurs identifiés comme à brouillage élevé, ou à brouillage persistant peut être fondée sur un scan fréquentiel ou une méthode d'apprentissage par intelligence artificielle, avec prédiction de la bande de repli à partir de mesure de densité spectrale de puissance à l'échelle de l'ensemble des équipements utilisateurs du cluster pour lequel un repli fréquentiel est organisé (le cluster C3).

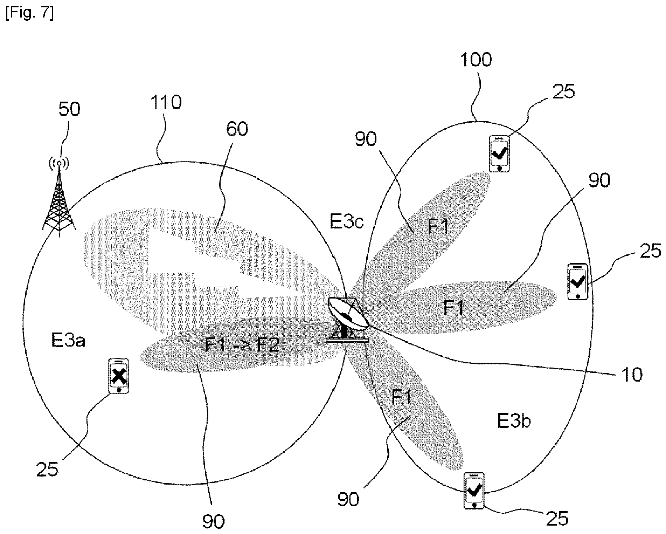

En figure 7, on a représenté la mise en oeuvre de la stratégie de lutte contre le brouillage, définie en figure 6. Il s'agit de l'étape E3 de mise en oeuvre de la stratégie, dans un cas simplifié à deux clusters, un premier cluster 100 et un deuxième cluster 110, formés selon l'étape E1 autour d'une station de base 10 communiquant avec des équipements utilisateurs 25 et visée par un brouilleur 50 qui crée une zone de brouillage 60.

Les faisceaux 90 sont formés pour tous les équipements utilisateurs - un faisceau par équipement utilisateur, et on optimise la direction et l'ouverture du faisceau - qu'ils soient dans le cluster 100 ou le cluster 110, car le cluster 100 a été évalué comme faiblement brouillé, et le cluster 110 fortement brouillé.

Et simultanément ou rapidement après, on modifie la bande de fréquences associée aux équipements utilisateurs 25 du cluster 110, en l'occurrence on passe de la bande de fréquences F1 à la bande de fréquence F2. Par contre, les équipements utilisateurs 25 du cluster 100 communiquent tous avec la station de base 10 sur la bande de fréquence F1 comme avant la mise en place du processus de lutte contre le brouillage.

Les trois moyens techniques suivants peuvent être mise en oeuvre isolément ou de manière combinée.
1) On active les parties de bande passante BWPs (BandWitdh Parts en communication cellulaire 5G) sur la bande de repli, par signalisation RRC (contrôle des ressources radio).
2) On notifie le contrôleur d'ordonnancement (ordonnanceur ou scheduler) en charge de la station de base pour brider certains blocs de ressources physiques, qui ont été identifiés comme brouillés.
3) On agrège une onde porteuse par activation des bandes de fréquences sélectionnées pour le repli, attribuées à un même utilisateur.

Puis on optimise les paramètres de la formation de faisceaux, à savoir la direction des faisceaux et leur ouverture ou l'angle de pointage, pour maximiser le gain en transmission et en réception par des faisceaux directifs vers la zone de l'équipement utilisateur concerné, pour contrer le brouilleur. Cette optimisation est menée par Intelligence Artificielle, par exemple par Optimisation Bayésienne.

De plus, on rejette l'interférence du brouilleur par envoi de zéros dans sa direction à partir de la station de base.

Dans un exemple de mise en oeuvre, 400 équipements utilisateurs sont répartis autour de 3 stations de base comportant chacune trois secteurs avec des directions de pointage à configurer. Un brouilleur omnidirectionnel est présent : certains utilisateurs sont insatisfaits de la qualité de la communication, mais d'autres sont satisfaits. Initialement, 52,5% des utilisateurs sont satisfaits, puis on configure les orientations des trois secteurs d'antenne, et 73,5% des utilisateurs sont satisfaits. Puis, on engage les principes de l'invention, et en premier lieu on effectue une reconfiguration de faisceaux pour chacun des trois secteurs de l'antenne, et 85% des utilisateurs sont satisfaits, et enfin, on effectue le repli fréquentiel, et 92.5% des utilisateurs sont satisfaits.

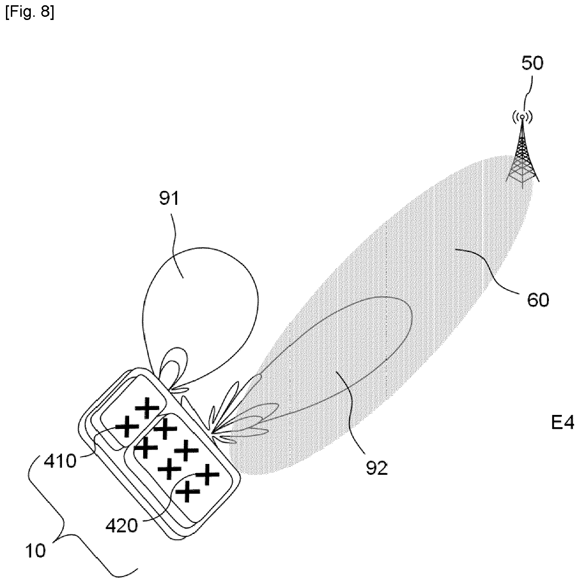

En figure 8, on a représenté l'étape E4 d'allocation des éléments d'antenne de l'antenne relai 10 confrontée au brouilleur 50, créant une zone de brouillage 60.

Les équipements utilisateurs des clusters faiblement brouillés sont servis prioritairement par un nombre faible d'éléments d'antenne, représentés par le panneau 410, générant, de par leur faible nombre, une couverture continue sur une zone large 91 (vu de la station de base il s'agit d'un angle ou d'un angle solide large), ce qui permet de maintenir une communication avec de nombreux équipements utilisateurs avec peu de ressources d'antenne, en l'occurrence un faible nombre d'éléments d'antenne. Et ce, quand bien même les équipements utilisateurs concernés sont relativement dispersés sur le terrain, l'essentiel étant qu'ils soient peu impactés par le brouillage.

Les équipements utilisateurs fortement brouillés sont servis par contre par des faisceaux directifs 92, dédiés chacun à un nombre limité d'équipements utilisateurs regroupés dans une zone étroite (vu de la station de base il s'agit d'un angle ou angle solide étroit), et nécessitant pour sa génération un nombre élevé d'éléments d'antenne, représentés par le panneau 420. Le gain est plus élevé du fait de la formation de faisceau, ce qui permet de surmonter le brouillage.

Le processeur d'ordonnancement choisit de plus, parmi les équipements utilisateurs et les faisceaux associés à servir, ceux pour lesquels il peut faire de l'allocation de ressources conjointe (co-scheduling : ordonnancement coordonné) ce qui est de nature à améliorer l'efficacité spectrale.

Ainsi, on effectue une allocation multi-faisceaux (technologie Multi User-MIMO) et on est alors en mesure de libérer des fréquences qui peuvent être réutilisées à d'autres fins.

L'invention s'applique à des réseaux de communication de type technologies cellulaires 4G ou ultérieur, mais aussi à des réseaux de communication militaires tactiques.

## Revendications

1. Procédé d'allocation dynamique de ressources pour la communication par ondes radio entre une station de base (10) d'un réseau de communication et des équipements utilisateurs (25), le procédé comprenant, en réaction à une détection (E0) de brouillage entre la station de base (10) et un ou plusieurs équipements utilisateurs (25), une étape d'affectation (E1) des équipements utilisateurs (25) à au moins deux classes d'équipements utilisateurs en fonction au moins d'un niveau d'impact du brouillage détecté sur la communication entre l'équipement utilisateur respectif et la station de base, puis, en fonction de l'affectation, pour les équipements utilisateurs d'au moins une classe de brouillage élevé, changement (E3a) d'au moins une bande ou sous-bande de fréquences pour leur communication avec la station de base, pour les équipements utilisateurs d'au moins une classe de brouillage non élevé, maintien (E3b) essentiellement inchangé des bandes et sous-bandes de fréquences pour leur communication avec la station de base, ainsi que configuration (E3c) de faisceaux de la station de base (10) vers des équipements utilisateurs (25) dont certains au moins sont dans la classe de brouillage non élevé.

2. Procédé d'allocation de ressources selon la revendication 1, **caractérisé en ce que** le changement (E3a) d'au moins une bande ou sous-bande de fréquences est mené vers au moins une autre bande ou sous-bande, identifiée par mesure de densité spectrale de puissance, évaluée au niveau d'un ensemble d'équipements utilisateurs.

3. Procédé d'allocation de ressources selon la revendication 1 ou la revendication 2, **caractérisé en ce que** le changement (E3a) d'au moins une bande ou sous-bande de fréquences comprend une activation de blocs de fréquences contigus ou une activation de blocs de fréquences pour agrégation d'une porteuse, d'autres blocs de fréquences étant éventuellement désactivés.

4. Procédé d'allocation de ressources selon l'une des revendications 1 à 3, **caractérisé en ce que** la configuration (E3c) de faisceaux comprend de plus une modification de faisceaux pour un équipement utilisateur d'une classe de brouillage élevé après le changement (E3a) d'au moins une bande ou sous-bande de fréquences pour la communication dudit équipement utilisateur avec la station de base, pour maximiser le gain pour un lien montant ou pour un lien descendant vers ledit équipement utilisateur.

5. Procédé d'allocation de ressources selon l'une des revendications 1 à 4, **caractérisé en ce que** le changement (E3a) d'au moins une bande ou sous-bande de fréquences comprend une détermination d'une bande spectrale brouillée d'un équipement utilisateur en analysant les blocs de ressources physiques alloués par le processeur d'ordonnancement.

6. Procédé d'allocation de ressources selon l'une des revendications 1 à 5, **caractérisé en ce que** l'affectation (E1) aux classes se fait de plus en prenant en compte des poids de formation de faisceaux formés préalablement à la détection (E0) de brouillage entre les équipements utilisateurs et la station de base.

7. Procédé d'allocation de ressources selon l'une des revendications 1 à 6, **caractérisé en ce que** l'affectation (E1) aux classes se fait de plus en utilisant des informations de localisation ou des techniques de positionnement.

8. Procédé d'allocation de ressources selon l'une des revendications 1 à 7, **caractérisé en ce que**, le réseau étant un réseau de téléphonie cellulaire 4G ou ultérieur, l'affectation (E1) aux classes se fait en utilisant des informations nativement collectées par la station de base.

9. Procédé d'allocation de ressources selon l'une des revendications 1 à 8, **caractérisé en ce que** le procédé comprend de plus une configuration (E4) de faisceaux, par mise en oeuvre d'une fonction d'antenne massive MIMO, comprenant pour des équipements utilisateurs de la classe de brouillage élevé un ordonnancement coordonné de plusieurs faisceaux séparés spatialement sur les mêmes ressources temps et fréquence.

10. Procédé d'allocation de ressources selon l'une des revendications 1 à 9, **caractérisé en ce que** le procédé comprend de plus une configuration (E4) de faisceaux qui ouvre, par mise en oeuvre d'une fonction d'antenne massive MIMO, plus largement des faisceaux dirigés vers les utilisateurs d'une classe de brouillage faible que vers les utilisateurs d'une classe de brouillage élevé.
